# EUROPEAN PATENT SPECIFICATION

(11) **EP 2 604 830 B1**
(45) Date of publication and mention of the grant of the patent: **18.02.2015**
(21) Application number: 12196979.4
(22) Date of filing: 13.12.2012
(51) Int. Cl.: F02D 19/06, F02D 19/08, F02D 41/06, F02D 41/00, F02D 41/30, F02B 7/02, F02B 7/04, F02B 11/00

(54) **Variable ignition type diesel-gasoline dual fuel powered combustion engine, system, and method**
Diesel-Benzin-Dual-Fuel-betriebener Verbrennungsmotor mit variabler Zündung, System und Verfahren
Moteur à combustion alimenté en carburant double essence et diesel de type allumage variable, système et procédé

(30) Priority: 15.12.2011 KR 20110135576
(43) Date of publication of application: 19.06.2013
(73) Proprietor: HYUNDAI MOTOR COMPANY, Seoul (KR)
(72) Inventor: Ki, Minyoung, 151-835 Seoul (KR); Choi, Dae, 445-723 Hwaseong-si (KR); Jung, Hyunsung, 430-702 Anyang-si (KR); Park, Seungil, 445-130 Hwaseong-si (KR); Lee, Hyeungwoo, 441-720 Suwon-si (KR); Chi, Yohan, 445-130 Hwaseong-si (KR)
(74) Representative: Viering, Jentschura & Partner Patent- und Rechtsanwälte

(56) References cited:
- EP-A1- 2 282 040
- DE-A1- 2 851 504
- DE-A1-102005 028 554
- US-A1- 2002 026 924
- US-A1- 2002 073 939
- US-A1- 2004 237 910

## Description

### BACKGROUND OF INVENTION

### Field of Invention

The present invention relates to a variable ignition type diesel-gasoline dual fuel powered combustion engine, a method for controlling of the same and a variable ignition type diesel-gasoline dual fuel powered combustion system, and in particular to a variable ignition type diesel-gasoline dual fuel powered combustion engine, a method for controlling of the same and a variable ignition type diesel-gasoline dual fuel powered combustion system which make it possible to select spark ignition (SI) or compression ignition (DI) depending on an engine's operating range.

### Description of Related Art

In a gasoline fuel engine, if a compression ratio is high, it is advantageous to combustion; however a knocking problem occurs.

It is needed to increase a compression ratio so as to meet an increasing strict exhaust gas regulation and high fuel efficiency, so a technology for inhibiting the above mentioned knocking problems is therefore needed.

If an exhaust gas recirculation (EGR) is adapted in an attempt to inhibit a knocking problem which occurs owing to the increase of a compression ratio, a knocking problem and a pumping loss could be prevented; however an ignition performance becomes bad due to a spark plug.

As a way to overcome the above mentioned problems, the combustion of a diesel-gasoline mixed fuel was introduced as an effective way. The diesel-gasoline fuel variable combustion is directed to igniting by injecting a diesel fuel which is used for the sake of an ignition control and is used as an ignition source, as compared to a conventional way that a diesel fuel and air are premixed and ignited using a spark plug during a compression stroke.

The above explained diesel-gasoline mixed fuel is advantages to the matters that a good ignition performance of a gasoline fuel can be obtained under a high EGR condition, and a fuel efficiency can be improved thanks to a combustion efficiency improving owing to a volume combustion as compared to a gasoline fuel engine, and the contaminants such as NOx and smoke can be prevented as compared to a diesel fuel engine, and a DPF is not needed thanks to the decrease of such contaminants, and it can be well adapted to a low cost injection system, so the unit cost can be significantly decreased as compared to a diesel fuel engine.

However, the above-explained diesel-gasoline fuel mixed combustion has problems to be solved; in other words, a compression ratio decreases in the low load range, and it is hard to obtain a designed ignition performance owing to a strict EGR condition, so a knocking problem occurs due to a high compression ratio in the high load range.

In this regard, a gasoline fuel-premixed compression and ignition engine structure, and a combustion timing control method of a premixed compression and ignition combustion and a premixed compression and ignition combustion engine are already known in the prior art.

EP 2 282 040 A1 discloses a multi-fuel internal combustion engine operated by introducing at least one type of fuel among at least two types of fuels having different properties into a combustion chamber or introducing a mixed fuel composed of at least the two types of fuels into the combustion chamber. To this end, an electronic control unit is provided with a fuel characteristics detection means and a fuel injection control means.

DE 28 51 504 A1 discloses a method for operating an internal combustion engine with variable compression ratio wherein a working volume is compressed and an air fuel mixture contained in the compressed volume burns after ignition.

US 2004/237910 A1 provides an internal combustion engine of the compression ignition type capable of operating with a compression ignition combustion scheme in a given operation range. The electronic control unit of the internal combustion engine detects an operating condition of the internal combustion engine and determines, according to the detected operating condition, which mode is to be used for operating the internal combustion engine, a 4-cycle compression ignition mode or a 2-cycle compression ignition mode.

US 2002/073939 A1 provides a method of operating a direct injection internal combustion engine operated on both spark-ignitable and auto-ignitable fuel.

US 2002/026924 A1 provides a self-igniting engine, wherein in a self-igniting possible range, both intake and exhaust valves are placed in a closure condition for a period from the end of an exhaust stroke to the beginning of an intake stroke for establishing a negative overlap period in which a residual gas is pressurized to increase its temperature, thus raising the air fuel mixture temperature in a combustion chamber up to a self-igniting possible temperature.

DE 10 2005 028554 A1 discloses a two-fuel internal combustion engine wherein an exhaust boundary layer is formed at an inner wall of the combustion chamber by recirculating a part of exhaust gases back into the combustion chamber through the intake valve or the exhaust valve.

The information disclosed in this Background section is only for enhancement of understanding of the general background of the invention and should not be taken as an acknowledgement or any form of suggestion that this information forms the prior art already known to a person skilled in the art.

### SUMMARY OF INVENTION

Accordingly, the present invention is made to resolve the problems encountered in the conventional art. Thus, the present invention as described in the independent claim features a method for controlling a variable ignition type diesel-gasoline dual fuel powered combustion engine. Preferred embodiments of the present invention are featured in the dependent claims. Various aspects of the present description provide for a variable ignition type diesel-gasoline dual fuel powered combustion engine, a method for controlling of the same, and a variable ignition type diesel-gasoline dual fuel powered combustion system which are directed to improving a combustion type depending on a load so as to improve a cold and idle engine start stability in the course of a diesel-gasoline dual fuel powered combustion in a diesel-gasoline dual fuel powered combustion engine while improving a combustion type depending on the loads so as to improve a full load performance.

Various aspects of the present description provide for a variable ignition type diesel-gasoline dual fuel powered combustion engine, comprising a cylinder block formed of a plurality of cylinders, each cylinder being connected to an air intake manifold for receiving air or a gasoline-mixed air and an exhaust manifold discharging an exhaust gas after combustions; a spark plug provided at each cylinder; a diesel fuel injector provided at each cylinder; and an electronic control unit (ECU) controlling the engine in such a way that the engine's operating ranges are judged, and when the range is the high load range or the low load range, a gasoline-mixed air is sucked into the interior of the cylinder and is spark-ignited by the spark plug, and when the range is between the low load range and the high load range, a gasoline-mixed air is sucked into the interior of the cylinder and a diesel fuel is injected by way of the diesel injector, so the diesel-gasoline fuels are compressed and ignited.

The ECU may be configured to judge the engine's operating ranges based on the speed and the load.

The present invention provides for a method for controlling a variable ignition type diesel-gasoline dual fuel powered combustion engine in which a spark plug and a diesel fuel injector are provided in the interior of a cylinder, and air or a gasoline-mixed air is introduced by way of an air intake manifold and is spark-ignited or compression-ignited in the interior of the cylinder, according to claim 1.

When it is judged that the range is the high load range or the low load range, a gasoline fuel combustion step may be performed, in which only the gasoline-mixed air is supplied to the interior of the cylinder and is spark-ignited.

When it is judged that the engine is not warmed up in the cold driving judgment step, the gasoline fuel combustion step may be performed.

When it is judged that the range is between the low load range and the high load range in the engine's operating range judgment step, a mixed fuel combustion may be performed, in which the diesel-gasoline fuels are mixed and combusted using the diesel fuel droplets ignited by a compression and ignition by sucking a gasoline-premixed air and injecting a diesel fuel.

Various aspects of the present description provide for a variable ignition type diesel-gasoline dual fuel powered combustion system which is formed of a plurality of cylinders, each cylinder being equipped with a spark plug and a diesel fuel injector, and air or a gasoline-mixed air is introduced into each cylinder, and an electronic control unit (ECU) is configured to control a gasoline fuel combustion, a diesel fuel combustion or a gasoline-diesel fuel combustion depending on the engine's operating range, comprising an ECU controlling an engine to operate with one selected among a diesel-gasoline fuel combustion and a gasoline fuel combustion depending on the engine's operating range by judging the engine's operating ranges.

The ECU controls the engine to operate in such a way that when the engine's operating range is the high load range or the low load range, a gasoline-mixed air is sucked into the interior of the cylinder and is spark-ignited by the spark plug.

The ECU controls the engine to operate in such a way that when the engine's operating range is between the low load range and the high load range, a gasoline-mixed air is sucked into the interior of the cylinder, and a diesel fuel is injected by way of the diesel injector, and a diesel-gasoline fuel is compressed and ignited.

In the variable ignition type diesel-gasoline dual fuel powered combustion engine, a method for controlling of the same and a variable ignition type diesel-gasoline dual fuel powered combustion system according to the present invention, a cold engine start can be improved in such a way to ignite the engine using a spark plug in the low load range.

In the middle load range, the advantages of a diesel-gasoline dual fuel powered combustion can be obtained with the aid of a diesel-gasoline dual fuel powered combustion.

In addition, only the gasoline fuel is injected in the high load range and is spark-ignited by a spark plug, and even in the ranges out of the diesel-gasoline dual fuel powered operating ranges, the driving can be possible, and the increase of the contaminants producing owing to the increase of the load can be prevented.

Therefore, the combustion can be performed under the optimum combustion conditions depending on the engine's operating ranges of the engine, so the engine start stability is improved, and the full load characteristics are improved, and the contaminants can be reduced.

The method of the present invention has other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

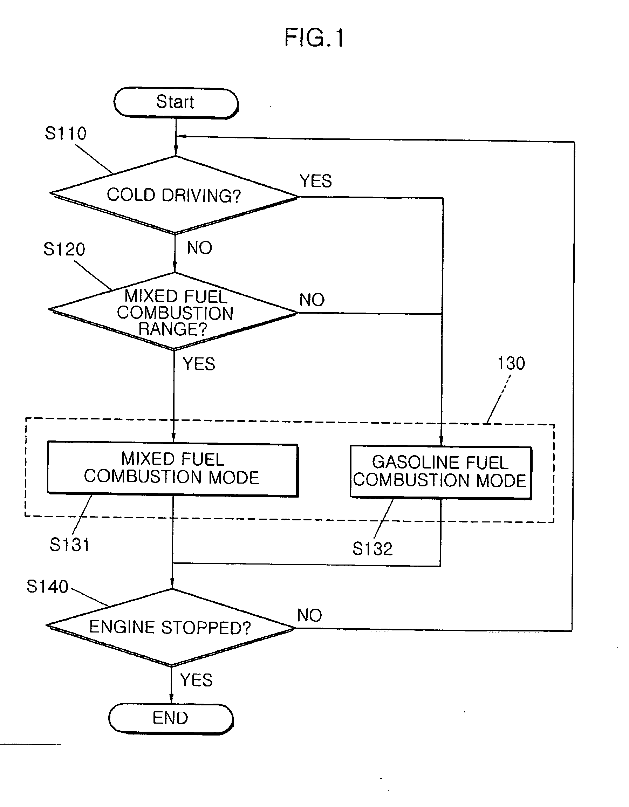

Figure 1 is a flow chart of an exemplary variable ignition type diesel-gasoline dual fuel powered combustion control method according to the present invention.
Figure 2 is a graph of the combustion mode by the combustion ranges depending on a variable ignition type diesel-gasoline dual fuel powered combustion engine control method according to the present invention.

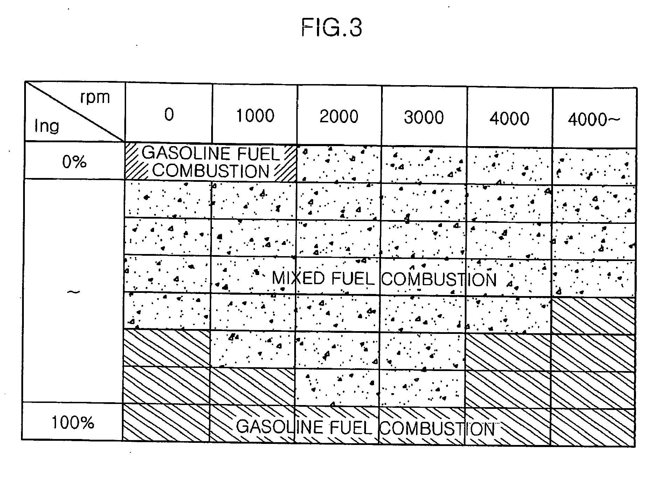

Figure 3 is a table of the combustion maps by the combustion ranges depending on a variable ignition type diesel-gasoline dual fuel powered combustion engine control method according to the present invention.
Figure 4A and 4B are a graph of the changes of a spark ignition signal when changing a combustion mode between spark ignition combustion and a mixed combustion in a variable ignition type diesel-gasoline dual fuel powered combustion engine control method according to the present invention.
Figure 5 is a view illustrating an exemplary variable ignition type diesel-gasoline dual fuel powered combustion engine according to the present invention.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the scope of the invention as defined by the appended claims.

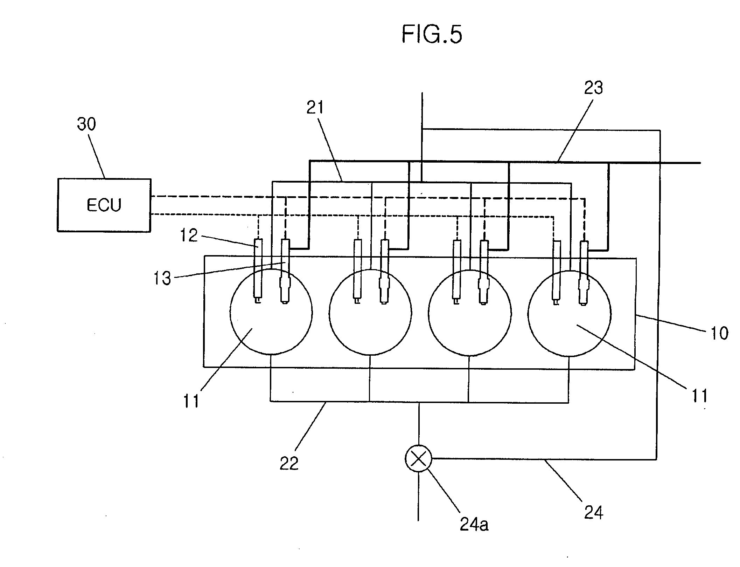

As shown in Figure 5, the variable ignition type diesel-gasoline dual fuel powered combustion engine according to the present invention comprises a cylinder block 10 formed of a plurality of cylinders 11, each cylinder 11 being connected to an air intake manifold 21 for receiving air or a gasoline-mixed air and an exhaust manifold discharging an exhaust gas after combustions; a spark plug 12 provided at each cylinder 11; a diesel fuel injector 13 provided at each cylinder 11; and an electronic control unit (ECU) 30 controlling the combustions. The ECU 30 is configured to judge the engine's operating ranges. When the operating range is the high load range or the low load range, a gasoline-mixed air is sucked into the interior of the cylinder 11 and is spark-ignited by a spark plug. When the operating range is between the low load range and the high load range, a gasoline-mixed air is sucked into the interior of the cylinder 11, and a diesel fuel is injected by way of the diesel fuel injector 13, thus igniting the diesel-gasoline fuel.

The cylinder block 10 comprises a plurality of cylinders 11. Each cylinder 11 is connected with an air intake manifold 21 for receiving air or a gasoline fuel-mixed air, which is generated as a gasoline fuel is mixed with air, and with an exhaust manifold 22 discharging exhaust gas after combustions. The variable ignition type diesel-gasoline dual fuel powered combustion engine according to the present invention can operate in either the gasoline fuel combustion mode or the gasoline-diesel dual fuel powered combustion mode, so a gasoline-mixed air is sucked into the air intake manifold 21.

Each cylinder 11 of the cylinder block 10 is equipped with a spark plug 12 and a diesel fuel injector 13. The spark plug 12 is used as an ignition source for the sake of the gasoline fuel combustion. The diesel injector 13 is designed to inject a diesel fuel and ignite it when diesel and gasoline fuels are mixed and ignited. The diesel injector 13 is connected to each diesel fuel supply line 23 for the purpose of injecting a diesel fuel to each cylinder 11.

In addition, a turbo charger can be used, which features in that the turbine is driven by the exhaust gas from the exhaust manifold 22, and the sucked air is compressed by a compressor driven by the turbine.

The exhaust manifold 22 and the air intake manifold 21 are connected with the EGR line 24 divided from the exhaust manifold 22 by way of the EGR valve 24a so as to re-circulate part of the exhaust gas into the interior of the cylinder 11.

The ECU 30 is configured to judge the engine's operating ranges of the vehicle and to determine what mode the engine operates in and controls each component depending on the determined driving mode. In other words, the ECU 30 serves to judge the engine's operating ranges of the vehicle. When the range is the high load range or the low load range, only the gasoline fuel is combusted in the engine, by which the exhaust gas discharge regulations can be efficiently handled. When the range is between the high load range and the low load range, in other words, in case of the middle load range, diesel and gasoline fuels are mixed and combusted.

The variable ignition type diesel-gasoline dual fuel powered combustion control method according to the present invention will be described.

The variable ignition type diesel-gasoline dual fuel powered combustion control method according to the present invention comprises a cold driving judgment step (S110) for judging whether or not the engine is warmed up, by measuring the temperature of cooling water, an engine's driving range judgment step S120 for judging the engine's operating ranges by the speed and load of the engine when it is judged that the engine is warmed up in the cold driving operating step (S110), and a combustion mode application step (S130) for driving in the previously set combustion mode of the engine depending on the engine's operating range determined in the engine's operating range judgment step (S120).

The cold driving judgment step (S110) is directed to judging the warming up state of the engine using the temperate of cooling water. In details, the warming up state of the engine is judged by measuring the temperature of cooling water and comparing it with the previously set warming up temperature. The warming up state of the engine is judged for the reasons that the engine is driven by the gasoline fuel having a good driving performance in the cold driving mode in the diesel-gasoline dual fuel powered combustion engine.

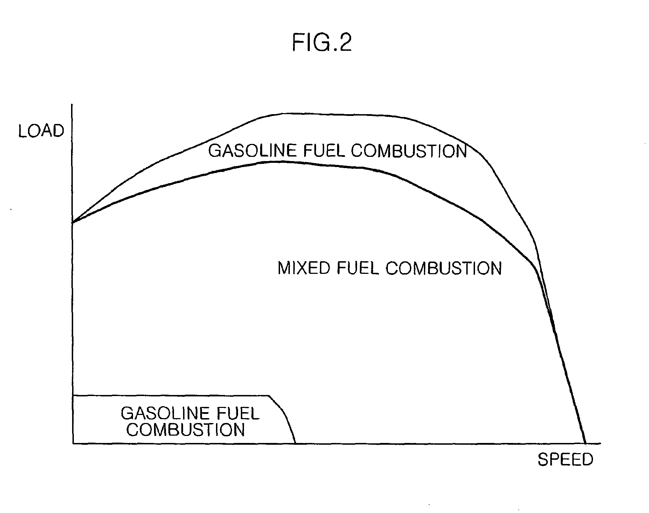

The engine's operating range judgment step (S120) is directed to judging what range the engine operates in by measuring the speed (rpm) and load of the engine. For example, as shown in Figure 2, the engine's operating range can be judged using the maps mapped with the load ranges depending on the speed and load of the engine. In other words, the range, in which the speed of the engine is low, and the load is low, becomes the low load range, and the range where the load is high irrespective of the speed of the engine becomes the high load range. The criteria for determining the low load range and the high load range is previously stored on the mapped maps depending on the speed (rpm) and load of the engine. When it is below the previously set low load range judgment criteria, the range is determined as the low load range, and when it is above the high load range judgment criteria, the range is determined as the high load range.

The combustion mode application step (S 130) serves to control the combustions of the diesel-gasoline dual fuel powered combustion engine depending on the engine's operating range determined in the engine's driving range judgment step (S120).

In the engine's operating range judgment step (S120), the diesel-gasoline fuels are mixed and combusted in the previously set method depending on the engine's operating range determined in the engine's operating range judgment step (S120) or the gasoline fuel combustion step (S132) might be performed, in which only the gasoline fuel is combusted.

For example, only the gasoline fuel is combusted when the engine's operating range of the vehicle is the high load range so as to easily control the ignition timing and to prevent the contaminants from increasing in proportion to the increase of the load.

Even when the engine's operating range of the vehicle is the low load range, the gasoline fuel combustion step (S132) is performed so as to decrease the production of the contaminants rather than to consider the performance of the driving force. In the gasoline fuel combustion step (S132), a gasoline fuel-mixed air is sucked into the interior of each cylinder 11 and is compressed and spark-ignited by the spark plug 12, so the contaminants such as smoke can be more efficiently decreased as compared to when only the diesel fuel is used. In addition, the low load range involves in the start of the engine which does not need a great driving force, the gasoline fuel having a better cold start performance as compared to the diesel fuel is combusted, thus enhancing an engine start performance in the cold mode.

When the engine's operating range judged by the load and speed of the engine is between the low load range and the high load range, in other words, in the middle load range, diesel and gasoline fuels are mixed and combusted, thus obtaining the advantages of both the diesel fuel combustion and the gasoline fuel combustion. In the diesel-gasoline dual fuel powered combustion step (S131), a premixed gasoline-mixed air is sucked into the interior of the cylinder 1 and is compressed, and a diesel fuel is injected by way of the diesel fuel injector 13. The diesel fuel droplets injected into the interior of the cylinder 11 are ignited and operate at an ignition source, thus generating a driving force by the diesel-gasoline dual fuel powered combustion. In the diesel-gasoline dual fuel powered combustion step (S131), since diesel fuel droplets operate as an ignition source, the volume combustion is possible, and the combustion can be enhanced as compared to hen only the gasoline fuel is combusted.

It is judged whether or not the engine is stopped after the mixed fuel combustion step (S131) or the gasoline fuel combustion step (S132). If the engine is not stopped, the engine's operating range judgment step (S120) is performed again, and then it is judged whether or not the engine's operating range is changed. If the engine's operating range is not changed, the combustion mode is controlled depending on the changed engine's operating range.

According to the variable ignition type diesel-gasoline dual fuel powered combustion engine control method of the present invention, since the combustion is performed in the engine by way of the gasoline combustion and the mixed fuel combustion, there might be formed a certain range between the gasoline fuel combustion and the mixed fuel combustion in which the combustion mode changes.

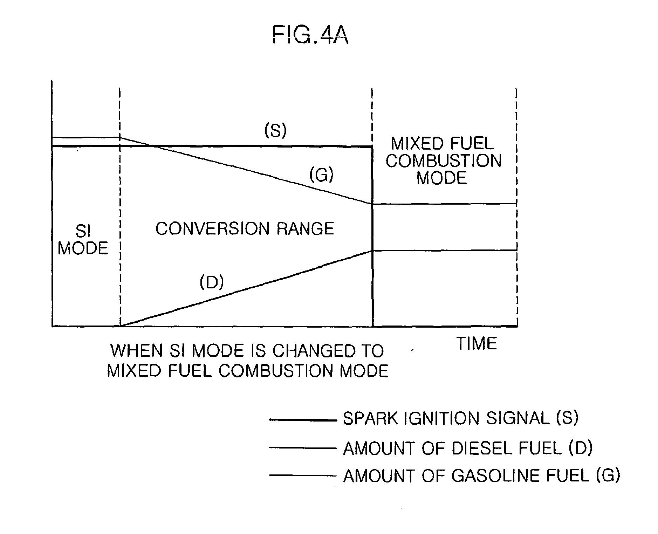

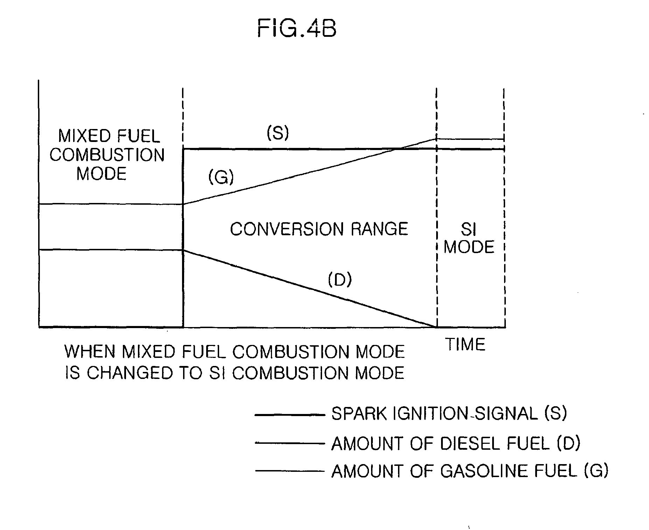

For example, Figure 4A and 4B show the spark ignition signal at the time of a mode change between the gasoline fuel combustion and the mixed fuel combustion, and the amounts of the diesel and gasoline fuels. In case that the low load range is changed to the middle load range, as shown in Figure 4A, the amount of the diesel fuel starts increasing from the moment the change starts, and the amount of the gasoline fuel decreases. When the mode enters the mixed fuel combustion mode, the diesel fuel and the gasoline fuel are injected at proper ratios, and the spark ignition signal is stopped. In case that the engine's operating range changes from the middle load range to the low load range, as shown in Figure 4B, when the combustion mode starts changing, the amount of the gasoline fuel increases, but the amount of the diesel fuel decreases. The spark ignition signal generates at the moment the change starts.

In the same manner, when the engine's operating range changes between the high load range and the middle load range, the spark ignition signal and the amounts of the gasoline fuel and diesel fuel change.

In the variable ignition type diesel-gasoline dual fuel powered combustion system according to the present invention which comprises a plurality of cylinders each having a spark plug and a diesel fuel injector, and air or a gasoline-mixed air is introduced into each cylinder, and the ECU controls the gasoline fuel combustion, the diesel fuel combustion or the diesel-gasoline fuel combustion depending on the engine's operating ranges, the ECU 30 judges the engine' operating ranges. If the range is the high load range or the low load range, the gasoline fuel is combusted, and if the range is between the low load range and the high load range, the diesel-gasoline dual fuel powered combustion is performed.

In other words, the ECU 30 judges what range the engine operates in by measuring the speed and load of the engine, and controls the engine by selecting the combustion mode depending on each engine's operating range.

For example, since the maximum performance is needed in the high load range, the gasoline fuel-mixed air is sucked and is spark-ignited for the purpose of combusting only the gasoline fuel so as to easily control the ignition timing and to prevent the increase of the contaminants in proportion to the increase of the load.

The decrease of the contaminants is the first thing to do in the low load range, so only the gasoline fuel is combusted.

In the middle load range, in other words, when the range is between the low load range and the high load range, the diesel-gasoline dual fuel powered combustion is performed, in which the gasoline-mixed air is sucked, and the diesel fuel is injected by way of the diesel fuel injector, so the diesel fuel droplets become an ignition source so as to make sure that the output can be enhanced as compared to the gasoline fuel combustion, and the contaminants can be decreased as compared to the diesel fuel combustion.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. A method for controlling a variable ignition type diesel-gasoline dual fuel powered combustion engine in which a spark plug (12) and a diesel fuel injector (13) are provided in the interior of a cylinder (11), and air or a gasoline-mixed air is introduced by way of an air intake manifold (21) and is spark-ignited or compression-ignited in the interior of the cylinder (11), comprising:
a cold driving judgment step (S110) for judging whether or not an engine is warmed up by measuring the temperature of cooling water;
an engine operating range judgment step (S120) for judging the engine operating range of the engine based on the speed and the load of the engine when it is judged that the engine is warmed up as a result of the judgment in the cold driving judgment step (S110); and
a combustion mode application step (S 130) for driving in the previously set combustion mode of the engine depending on the engine operating range determined in the engine operating range judgment step (S120);
**characterized in that**
after the combustion mode application step (S 130), an engine stop judgment step is performed for judging whether or not the engine is stopped, and when it is judged that the engine is not stopped in the engine stop judgment step, the cold driving judgment step (S110) is performed.

2. The method for controlling a variable ignition type diesel-gasoline dual fuel powered combustion engine according to claim 1, wherein when it is judged that the range is the high load range or the low load range in the engine operating range judgment step (S120), a gasoline fuel combustion step (S 132) is performed, in which only the gasoline-mixed air is supplied to the interior of the cylinder (11) and is spark-ignited.

3. The method for controlling a variable ignition type diesel-gasoline dual fuel powered combustion engine according to claim 2, wherein when it is judged that the engine is not warmed up in the cold driving judgment step (S110), the gasoline fuel combustion step (S 132) is performed.

4. The method for controlling a variable ignition type diesel-gasoline dual fuel powered combustion engine according to claim 1, wherein when it is judged that the range is between the low load range and the high load range in the engine operating range judgment step (S120), a mixed fuel combustion is performed, in which the diesel-gasoline fuels are mixed and combusted using the diesel fuel droplets ignited by a compression and ignition by sucking a gasoline-premixed air and injecting a diesel fuel.

## Patentansprüche

1. Ein Verfahren zum Steuern eines Diesel-Benzindualkraftstoffbetriebenen Verbrennungsmotors vom Typ mit variabler Zündung, bei dem eine Zündkerze (12) und ein Dieselkraftstoff-Injektor (13) im Inneren eines Zylinders (11) vorgesehen sind und Luft oder ein Benzin-Luft-Gemisch über einen Lufteinlasskrümmer (21) eingeführt wird und im Inneren des zylinders (11) funkengezündet oder verdichtungsgezündet wird, aufweisend:
einen Kalt-Aritriebs-Beurteilungsschritt (S110) zum Beurteilen, ob ein Motor aufgewärmt ist oder nicht, durch Messen der Kühlwassertemperatur,
einen Motorbetriebsbereich-Beurteilungsschritt (S120) zum Beurteilen des Motorbetriebsbereichs des Motors basierend auf der Geschwindigkeit und der Motorlast, wenn als Ergebnis der Beurteilung im Kalt-Antriebs-Beurteilungsschritt (S110) beurteilt wird, dass der Motor aufgewärmt ist, und
einen Verbrennungsmodus-Anwendungsschritt (S130) zum Antreiben im zuvor eingestellten Verbrennungsmodus des Motors in Abhängigkeit von dem Motorbetriebsbereich, der in dem Motorbetriebsbereich-Beurteilungsschritt (S120) ermittelt wurde,
**dadurch gekennzeichnet, dass**
nach dem Verbrennungsmodus-Anwendungsschritt (S130) ein Motorstopp-Beurteilungsschritt durchgeführt wird, zum Beurteilen, ob der Motor gestoppt ist oder nicht, und wenn im Motorstopp-Beurteilungsschritt beurteilt wird, dass der Motor nicht gestoppt ist, der Kalt-Antriebs-Beurteilungsschritt (S110) durchgeführt wird.

2. Das Verfahren zum Steuern eines Diesel-Benzindualkraftstoffbetriebenen Verbrennungsmotors vom Typ mit variabler Zündung gemäß Anspruch 1, wobei, wenn im Motorbetriebsbereich-Beurteilungsschritt (S120) beurteilt wird, dass der Bereich der Hochlastbereich oder der Niedriglastbereich ist, ein Benzinkraftstoff-Verbrennungsschritt (S132) durchgeführt wird, bei dem nur das Benzin-Luft-Gemisch dem Inneren des Zylinders (11) zugeführt und funkengezündet wird.

3. Das Verfahren zum Steuern eines Diesel-Benzindualkraftstoffbetriebenen Verbrennungsmotors vom Typ mit variabler Zündung gemäß Anspruch 2, wobei, wenn im Kalt-Antriebs-Beurteilungsschritt (S110) beurteilt wird, dass der Motor nicht aufgewärmt ist, der Benzinkraftstoff-Verbrennungsschritt (S132) durchgeführt wird.

4. Das Verfahren zum Steuern eines Diesel-Benzindualkraftstoffbetriebenen Verbrennungsmotors vom Typ mit variabler Zündung gemäß Anspruch 1, wobei, wenn im Motorbetriebsbereich-Beurteilungsschritt (S120) beurteilt wird, dass der Bereich zwischen dem Niedriglastbereich und dem Hochlastbereich liegt, eine Mischkraftstoffverbrennung durchgeführt wird, bei der der Diesel- und der Benzinkraftstoff gemischt und verbrannt werden, unter Verwendung der Dieselkraftstofftröpfchen, die durch eine Verdichtung und Zündung durch Ansaugen eines Benzin-Luft-Vorgemischs und Einspritzen eines Dieselkraftstoffs gezündet werden.

## Revendications

1. Un procédé pour contrôler un moteur à combustion alimenté en carburant double essence et diesel de type allumage variable, dans lequel une bougie d'allumage (12) et un injecteur de carburant diesel (13) sont prévus à l'intérieur d'un cylindre (11), et de l'air ou un mélange essence/air est introduit par le biais d'un collecteur d'admission d'air (21) et est allumé par étincelle ou allumé par compression à l'intérieur du cylindre (11), comportant :
une étape de jugement d'entraînement à froid (S110) pour juger si un moteur est réchauffé ou pas en mesurant la température d'eau de refroidissement,
une étape de jugement de plage de fonctionnement du moteur (S120) pour juger la plage de fonctionnement du moteur en fonction de la vitesse et la charge du moteur lors qu'on juge que le moteur est réchauffé du fait du jugement dans l'étape de jugement d'entraînement à froid (S110), et
une étape d'application de mode de combustion (S130) pour l'entraînement dans le mode de combustion du moteur mis en place préalablement en fonction de la plage de fonctionnement du moteur déterminée dans l'étape de jugement de plage de fonctionnement du moteur (S120),
**caractérisé en ce que**,
suivant l'étape d'application de mode de combustion (S130), une étape de jugement d'arrêt de moteur est réalisée pour juger si le moteur est arrêté ou pas, et lorsqu'on juge que le moteur n'est pas arrêté dans l'étape de jugement d'arrêt de moteur, l'étape de jugement d'entraînement à froid (S110) est réalisée.

2. Le procédé pour contrôler un moteur à combustion alimenté en carburant double essence et diesel de type allumage variable selon la revendication 1, dans lequel, lorsqu'on juge que la plage est la plage de charge élevée ou la plage de charge faible dans l'étape de jugement de plage de fonctionnement du moteur (S120), une étape de combustion de carburant essence (S132) est réalisée, dans laquelle seul le mélange essence/air est introduit à l'intérieur du cylindre (11) et est allumé par étincelle.

3. Le procédé pour contrôler un moteur à combustion alimenté en carburant double essence et diesel de type allumage variable selon la revendication 2, dans lequel, lorsqu'on juge que le moteur n'est pas réchauffé dans l'étape de jugement d'entraînement à froid (S110), l'étape de combustion de carburant essence (S132) est réalisée.

4. Le procédé pour contrôler un moteur à combustion alimenté en carburant double essence et diesel de type allumage variable selon la revendication 1, dans lequel, lorsqu'on juge dans l'étape de jugement de plage de fonctionnement du moteur (S120) que la plage est entre la plage de charge faible et la plage de charge élevée, une combustion de carburant mixte est réalisée, dans laquelle les carburants diesel et essence sont mélangés et brûlés moyennant les gouttelettes de carburant diesel allumées par une compression et allumage par aspiration d'un prémélange essence/air et injection d'un carburant diesel.
